(19) Europäisches Patentamt
European Patent Office
Office européen des brevets

(11) Veröffentlichungsnummer: **0 054 193**
**B1**

(12) # EUROPÄISCHE PATENTSCHRIFT

(45) Veröffentlichungstag der Patentschrift: **02.11.83**

(51) Int. Cl.³: **C 09 D 5/02**, B 05 D 1/00, B 05 D 7/24

(21) Anmeldenummer: **81109711.2**

(22) Anmeldetag: **16.11.81**

(54) **Verfahren zum Herstellen eines Überzuges.**

(30) Priorität: **26.11.80 DE 3044495**

(43) Veröffentlichungstag der Anmeldung: **23.06.82 Patentblatt 82/25**

(45) Bekanntmachung des Hinweises auf die Patenterteilung: **02.11.83 Patentblatt 83/44**

(84) Benannte Vertragsstaaten: **AT BE CH DE FR GB IT LI NL SE**

(56) Entgegenhaltungen:
**EP-A-0 009 110**
**GB-A-1 521 354**

(73) Patentinhaber: **BASF Farben + Fasern Aktiengesellschaft, Am Neumarkt 30, D-2000 Hamburg 70 (DE)**

(72) Erfinder: **Diefenbach, Horst, Dr., Lerchenhain 8, D-4405 Nottuln (DE)**
Erfinder: **Dors, Bernhard, Dr., Rückertstrasse 1, D-4400 Münster (DE)**
Erfinder: **Lessmeister, Peter, Dr., Koskamp 4, D-4400 Münster (DE)**
Erfinder: **Warnke, Klaus, Dr., Grüner Weg 11a, D-4400 Münster (DE)**

(74) Vertreter: **Habbel, Hans-Georg, Dipl.-Ing., Postfach 3429 Am Kanonengraben 11, D-4400 Münster (DE)**

**EP 0 054 193 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zum Herstellen eines Überzuges

Die Erfindung betrifft ein Verfahren zum Herstellen eines Überzuges durch Aufbringen eines Überzugsmittels auf Basis einer wässrigen Dispersion, die gegebenenfalls Pigmente, Härter, Füllstoffe und sonstige bekannte Hilfsmittel enthält, auf ein Substrat durch ein Beschichtungsverfahren wie Spritzen, Streichen, Tauchen, Fluten, Walzen, Rakeln oder dergleichen und anschliessendes Härten des Überzuges.

Aus der DE-OS 27 16 118 ist ein Verfahren zur Herstellung eines Lackfilms durch Aufbringen einer wässrigen Suspension eines festen, Netzmittel und gegebenenfalls Verlaufmittel enthaltenden Kunstharzes oder einer Kunstharzmischung bekannt. Als Netzmittel bzw. Stabilisierungsmittel wird bei dem bekannten Verfahren ein Alkylphenyl-oxethylat verwendet.

Die Verwendung von Alkylphenyl-oxethylaten oder ähnlichen Netzmitteln bringt jedoch den Nachteil mit sich, dass diese Stabilisierungsmittel die Eigenschaften des endgültigen Lackfilms verschlechtern. Sie verbleiben beim Einbrennen des Überzugs im Lackfilm, wobei sie jedoch kein einvernetzter Bestandteil sind. Häufig werden durch diese Stabilisierungsmittel die Wasserfestigkeit, die Wetterbeständigkeit und die Elastizität des resultierenden Lackfilms herabgesetzt. Auch bieten die bekannten, unter Verwendung üblicher Stabilisierungsmittel hergestellten Lackfilme häufig keinen zufriedenstellenden Korrosionsschutz.

Es ist Aufgabe der Erfindung, diese Nachteile des Standes der Technik zu vermeiden und ein Verfahren der eingangs genannten Art zu schaffen, bei dem eine Beeinträchtigung des Lackfilms durch das Stabilisierungsmittel ausgeschlossen ist.

Das Stabilisierungsmittel soll vielmehr ein integraler Bestandteil des Lackfilms werden und in positiver Weise zu den Eigenschaften desselben beitragen.

Diese Aufgabe wird erfindungsgemäss dadurch gelöst, dass man eine Dispersion eines pulverförmigen Bindemittels aufbringt, die als Stabilisierungsmittel ein Salz eines kationischen Kunstharzes enthält, und den Überzug durch Einbrennen zu einem auf dem Substrat festhaftenden Film härtet.

Pulverförmige Bindemittel sind als sogenannte Pulverlacke an sich bekannt. Sie werden üblicherweise so hergestellt, dass das zu verwendende Bindemittel mit Pigment, Härter und Additiven in einem Mischer intensiv vorgemischt wird. Diese Mischung wird in einem Extruder homogenisiert. Das hierbei entstehende Extrudat wird abgekühlt und grob gemahlen. Durch Feinmahlung und Sichtung erhält man ein verarbeitungsfähiges Pulver. Wässrige Dispersionen von Pulverlacken werden auch als Slurry bezeichnet.

Das Stabilisierungsmittel kann in gelöster oder disperser Form oder in feinteiliger Form, d.h. in Form eines ionischen Pulvers, in dem Überzugsmittel vorliegen.

Die pulverförmigen Bestandteile des Überzugsmittels können vorteilhaft Pigmente, Härter, Füllstofe und/oder sonstige bekannte Hilfsmittel enthalten.

Als Stabilisierungsmittel wird vorteilhaft ein kationisches Kunstharz verwendet, das durch wenigstens teilweise Neutralisation eines Stickstoffatome im Molekül enthaltenden basischen Harzes mit einer sauren Verbindung hergestellt worden ist. Das Stabilisierungsmittel kann auch quartäre Ammoniumgruppen, Sulfoniumgruppen und/oder Phosphoniumgruppen enthalten.

Der Anteil des kationischen Stabilisierungsmittels an dem gesamten Bindemittelanteil des Überzugsmittels beträgt vorteilhaft 0,5 bis 70 Gewichtsprozent, vorzugsweise 1 bis 50 Gewichtsprozent, besonders bevorzugt 2 bis 35 Gewichtsprozent.

Vorteilhaft kann die wässrige Dispersion organische Lösungsmittel enthalten, die in Kombination mit Wasser das pulverförmige Bindemitel nicht anlösen.

Das Überzugsmittel kann durch gemeinsames Dispergieren des pulverförmigen Bindemittels und des Stabilisierungsmittels in Wasser hergestellt werden. Es ist auch möglich, das pulverförmige Bindemittel und das Stabilisierungsmittel durch gemeinsames Extrudieren zu mischen und das Extrudat zu zerkleinern und in Wasser zu dispergieren.

Ein wichtiges Merkmal der Erfindung ist es, dass die wässrige Dispersion als pulverförmiges Bindemittel feinteilige, nichtionische Kunststoffe eindispergiert enthält. Diese haben in der Form der Pulverlacke bereits Eingang in die Lackierung von Metallobjekten gefunden. Diese Kunststoffpulver sind bei Raumtemperatur fest und gut mahlbar. Sie sind nicht reaktiv in der Art, dass sie bereits bei Raumtemperatur mit sich selbst oder mit anderen verträglichen Harzen, wie dem kationischen Stabilisierungsmittel, zu hochmolekularen Stoffen verfilmen. Bei den üblichen Einbrennbedingungen, die bei etwa 160°C liegen, schmelzen sie jedoch und verbinden sich mit dem kationischen Stabilisierungsmittel auf dem beschichteten Substrat zu einem verträglichen Film.

Als pulverförmige Bindemittel eignen sich im Rahmen dieser Erfindung Kunststoffpulver aus der Gruppe der Epoxidharze, Polyesterharze, Acrylatharze, Polyurethanharze, Polyamidharze, Polyäthylen, Polypropylen und Celluloseacetobutyrate. Diese Kunststoffpulver sind sämtlich bekannt und zum grössten Teil handelsüblich.

Sämtliche Pulver dieser Art sind in der erfindungsgemässen wässrigen Dispersion einsatzfähig, vorausgesetzt, dass sie mit dem Stabilisierungsmittel verträglich sind. Eine Unverträglichkeit lässt sich leicht daran erkennen, dass sich der Überzug beim Einbrennen entmischt und dadurch inhomogen wird. Das Kunststoffpulver kann in reiner Form in der wässrigen Dispersion

dispergiert sein. Es ist aber auch möglich, ein Kunststoffpulver zu verwenden, das Füllstoffe enthält. In diesem Fall sind die Pigmente und/oder Füllstoffe bei der Hersellung des Kunststoffpulvers bereits in dieses miteingearbeitet worden.

Die erfindungsgemässe wässrige Dispersion ist nicht allein darauf beschränkt, dass sie nur ein einziges nichtionisches synthetisches Harz enthält. Es können auch Gemische von zwei und mehr verschiedenen Kunststoffpulvern enthalten sein. Hierbei kann das eine oder andere Kunststoffpulver Pigmente und/oder Füllstoffe enthalten, das andere aber frei von diesen Zusatzstoffen sein.

Die zum Einsatz gelangenden Kunststoffpulver können ausser den Pigmenten und Füllstoffen noch geringe Mengen von Härtungsmitteln und andere Zusatzstoffe, die das Fliessverhalten des Pulvers während des Einbrennens regulieren, enthalten. Diese in das Kunststoffpulver eingearbeiteten Zusätze werden in ihrer Wirkung nicht durch die wässrige Dispersion negativ beeinflusst.

Die in dem erfindungsgemässen Verfahren verwendete wässrige Dispersion enthält als Stabilisierungsmittel basische Gruppen enthaltende kationische Kunstharze. Als bevorzugt geeignet sind Reaktionsprodukte eines epoxidgruppenhaltigen Harzes mit primären und/oder sekundären Aminen oder Reaktionsprodukte des epoxidgruppenhaltigen Harzes mit epoxidgruppenfreien Mannich-Basen. Zusammen mit dem pulverförmigen Bindemittel bildet dieses Kunstharz eine wässrige Dispersion, die bei Raumtemperatur beständig ist.

Als epoxidgruppenhaltiges Harz kann eine beliebige monomere oder polymere Verbindung oder eine Mischung solcher Verbindungen verwendet werden, die im Mittel eine oder mehrere Epoxidgruppen pro Molekül enthält. Polyepoxidverbindungen mit 2 bis 3 Epoxidgruppen pro Molekül sind bevorzugt. Eine besonders gut geeignete Klasse von Polyepoxiden sind die Polyglycidyläther von Polyphenolen, wie von Bisphenol A. Man erhält diese z.B. durch Verätherung eines Polyphenols mit Epichlorhydrin oder Dichlorhydrin in Gegenwart von Alkali. Als phenolische Verbindung kommen bei solchen Polyepoxiden z.B. Bis(4-hydroxyphenyl)-2,2-propan, 4,4'-Dihydroxybenzophenol, Bis(4-hydroxyphenyl)-1,1-äthan, Bis(4-hydroxyphenyl)-1,1-isobutan, Bis(4-hydroxy-tert.-butylphenyl)-2,2-propan, Bis(2-hydroxynaphthyl)-methan und 1,5-Dihydroxynaphthalin in Betracht. In manchen Fällen ist es vorteilhaft, Polyepoxide mit etwas höheren Molekulargewichten und aromatischen Gruppen zu verwenden. Man erhält sie, indem man den Diglycidyläther mit einem Polyphenol, wie Bisphenol A umsetzt und dieses Produkt dann weiter mit Epichlorhydrin zu einem Polyglycidyläther umsetzt. Der Polyglycidyläther von Polyphenolen enthält bevorzugt freie Hydroxylgruppen zusätzlich zu den Epoxidgruppen.

Die Polyglycidyläther der Polyphenole können als solche verwendet werden, doch ist es häufig vorteilhaft, einen Teil der reaktionsfähigen Stellen (Hydroxylgruppen oder in manchen Fällen Epoxidgruppen) mit einem modifizierenden Material umzusetzen, um die Filmeigenschaften des Harzes zu modifizieren. Für eine derartige Umsetzung kommt die Veresterung mit Carbonsäuren, insbesondere Fettsäuren und/oder die Verätherung mit Mono- oder Polyalkoholen in Betracht, die gut bekannt sind. Besonders geeignete Carbonsäuren sind gesättigte Fettsäuren und insbesondere Pelargonsäure.

Geeignete Polyalkohole sind Äthylenglykol, Propylenglykol, Butandiol-1,2 oder 1,4-Hexandiol, Neopentylglykol, Dimethylolcyclohexan, Perhydrobisphenol A, ferner Polyester, wie z.B. vorzugsweise lineare Polyester mit endständigen OH-Gruppen. Ausserdem können die Epoxidharze mit isocyanatgruppenhaltigen organischen Materialien oder anderen reaktionsfähigen organischen Materialien, wie z.B. Polyäthern mit reaktionsfähigen Endgruppen, modifiziert werden. Eine andere Gruppe von geeigneten Polyepoxiden erhält man aus Novolaken oder ähnlichen Polyphenolharzen.

Auch die Polyglycidyläther von mehrwertigen Alkoholen sind geeignet. Als Beispiele derartiger mehrwertiger Alkohole seien Äthylenglykol, Diäthylenglykol, Triäthylenglykol, 1,2-Propylenglykol, 1,4-Propylenglykol, 1,5-Pentandiol, 1,2,6-Hexantriol, Glycerin, Bis(4-hydroxycyclohexyl)-2,2-propan genannt. Es können auch Polyglycidylester von Polycarbonsäuren verwendet werden, die man durch die Umsetzung von Epichlorhydrin oder ähnlichen Epoxidverbindungen mit einer aliphatischen oder aromatischen Polycarbonsäure, wie Oxalsäure, Bernsteinsäure, Glutarsäure, Terephthalsäure, 2,6-Naphthalindicarbonsäure und dimerisierte Linolensäure, erhält. Beispiele sind Glycidyladipat und Glycidylphthalat.

Geeignet sind ferner Copolymerisate von ungesättigten Verbindungen, die eine Epoxidgruppe enthalten, z.B. Glycidylmethacrylat, Glycidylacrylat, N-Glycidylacrylamid, Allylglycidyläther und N-Glycidylmethacrylamid, mit einem anderen ungesättigten Monomeren, das damit copolymerisierbar ist.

Die Umsetzung der epoxidgruppenhaltigen Materialien mit einem Amin erfolgt unter Bildung eines Reaktionsproduktes. Das verwendete Amin kann primär oder sekundär sein, wobei sekundäre Amine sich besonders gut eignen. Bevorzugt sollte das Amin eine in Wasser lösliche Verbindung sein. Beispiele solcher Amine sind Mono- und Dialkylamine, wie Methylamin, Äthylamin, Propylamin, Butylamin, Dibutylamin, Dimethylamin, Diäthylamin, Dipropylamin, Diisopropylamin, Methylbutylamin, Dibutylamin, Diäthanolamin, Diamylamin, Diisopropanolamin, Äthylaminoäthanol, Äthylaminoisopropanol, Äthanolamin, Äthylendiamin, Diäthylentriamin, Methylcyclohexylamin, Dicyclohexylamin.

In den meisten Fällen werden niedermolekulare Amine verwendet, doch ist es auch möglich, höhermolekulare Monoamine anzuwenden, insbesondere dann, wenn die Absicht besteht, die Flexibilität des Harzes durch den Einbau solcher Amine zu erhöhen. In ähnlicher Weise kann man auch Mischungen aus niedermolekularen und höhermolekularen Aminen zur Modifizierung der Harzeigenschaften verwenden.

Die Amine können auch noch andere Gruppen enthalten, doch sollen diese die Umsetzung des Amins mit der Epoxidgruppe nicht stören und auch nicht zu einer Gelierung der Reaktionsmischung führen.

Die Umsetzung des Amins mit der epoxidgruppenhaltigen Verbindung tritt häufig schon beim Vermischen dieser Materialien ein. Es kann aber gegebenenfalls eine Erwärmung auf mässig erhöhte Temperatur wünschenswert sein, z.B. auf 50 bis 150°C, doch sind Umsetzungen auch bei niedrigeren und höheren Temperaturen möglich. Häufig ist es vorteilhaft, zur Beendigung der Umsetzung die Temperatur gegen das Ende der Reaktion mindestens geringfügig für eine ausreichende Zeit zu erhöhen, um eine vollständige Umsetzung sicherzustellen.

Für die Umsetzung mit der epoxidgruppenhaltigen Verbindung sollte mindestens eine solche Menge an Amin verwendet werden, dass das Harz einen kationischen Charakter annimmt. Es können im wesentlichen alle Epoxidgruppen des Harzes mit einem Amin umgesetzt werden. Es ist aber auch möglich, überschüssige Epoxidgruppen in dem Harz zu belassen, die bei der Berührung mit Wasser unter Bildung von Hydroxylgruppen hydrolisieren.

Das basische Gruppen enthaltende kationische Kunstharz liegt in der wässrigen Dispersion in protonisierter Form vor. Protonisiert wird das Trägerharz mit geeigneten anorganischen und/oder organischen Säuren, vorzugsweise wasserlöslichen Carbonsäuren und ist in protonisierter Form in Wasser löslich oder dispergierbar bzw. mit Wasser mischbar und verdünnbar. Der pH-Wert der wässrigen Dispersion kann auf einen Wert zwischen 1 und 9 eingestellt werden.

Geeignete Säuren sind praktisch alle bekannten anorganischen und organischen Säuren, wie z.B. Salzsäure, Schwefelsäure, Phosphorsäure, Kohlensäure, p-Toluolsulfonsäure, Essigsäure, Propionsäure, Ameisensäure, Zitronensäure, Milchsäure, Äpfelsäure, Fumarsäure, Maleinsäure, Phthalsäure sowie die Halbester der Fumarsäure, Maleinsäure und Phthalsäure mit einwertigen oder mehrwertigen aliphatischen Alkoholen, wie Methanol, Äthanol, Propanol, Äthylenglykol. Die besten Ergebnisse werden erhalten mit Essigsäure, Milchsäure und Ameisensäure, die deshalb als bevorzugt geeignete Protonisierungsmittel vorgeschlagen werden.

Der gesamte Aufbau des als Stabilisierungsmittel verwendeten aminogruppenhaltigen kationischen Kunstharzes erlaubt nach seiner Protonisierung mit Säuren zu gewährleisten, dass das pulverförmige Bindemittel in ihm so verteilt werden kann, dass eine stabile wässrige Dispersion entsteht.

Anstelle der Amine kann die Reaktion der epoxidgruppenhaltigen Harze auch mit epoxidgruppenfreien Mannich-Basen zur Bildung der kationischen Kunstharze erfolgen. Diese Umsetzung ist bekannt und in den Patentanmeldungen DE-OS 2 419 179, DE-OS 2 320 301, DE-OS 2 357 075, DE-OS 2 541 801, DE-OS 2 554 080 und DE-OS 2 751 499 beschrieben.

Als epoxidfreie Mannich-Basen sind solche bevorzugt geeignet, die durch Reaktion der Komponenten

($a_1$) äthergruppenfreien kondensierten Phenolen mit mindestens zwei aromatischen Ringen und mindestens zwei phenolischen Hydroxylgruppen und/oder

($a_2$) äthergruppenhaltigen kondensierten Phenolen mit mindestens zwei aromatischen Ringen und mindestens einer phenolischen Hydroxylgruppe,

($a_3$) sekundären Aminen mit mindestens einer Hydroxyalkylgruppe, gegebenenfalls im Gemisch mit

($a_4$) sekundären Dialkyl- oder Dialkoxyalkylaminen ohne freie Hydroxylgruppen,

($a_5$) Formaldehyd oder Formaldehyd abspaltende Verbindungen

erhalten werden.

Zu den einzelnen Komponenten ist folgendes zu sagen:

Als Komponente $a_1$ – äthergruppenfreie kondensierte Phenole mit mindestens zwei aromatischen Ringen und mindestens zwei phenolischen Hydroxylgruppen – kommen als besonders geeignet in Frage kondensierte Phenole der allgemeinen Formel

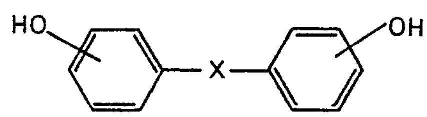

wobei die Hydroxylgruppen in ortho- und para-Stellung zu X stehen und X ein geradkettiger oder verzweigter, zweiwertiger aliphatischer Rest mit 1 bis 3 Kohlenstoffatomen oder

$SO_2$, SO oder $CH_2$–N–$CH_2$
|
R

(mit R = Alkylrest mit 1 bis 6 C-Atomen) ist, vorzugsweise geeignet ist Bis-phenol A. Auch niedrigmolekulare Umsetzungsprodukte aus Phenolen mit Formaldehyd, sogenannte Novolake können eingesetzt werden.

Gegebenenfalls können im Gemisch mit den kondensierten Phenolen $a_1$) oder auch anstelle dieser

weitere kondensierte Phenole $a_2$) verwendet werden, die mindestens eine phenolische Hydroxylgruppe und darüber hinaus noch eine oder mehrere Äthergruppen im Molekül enthalten. Diese Produkte besitzen die allgemeine Formel

HO-B-[O-E-O]$_n$-H
bzw. HO-B-[O-E-O]$_n$-P,

wobei B für den Rest

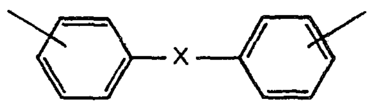

steht und X die oben angegebene Bedeutung hat, E für einen Hydroxylgruppen enthaltenden, durch Addition einer Epoxidverbindung an eine phenolische Hydroxylgruppe erhaltenen Rest, P für einen Phenyl- oder Alkylphenylrest sowie n für eine ganze Zahl von 1 bis 3 steht und wobei als Epoxidverbindungen (für E) bevorzugt Epoxidharze, wie z.B. Diglycidyläther von Bisphenol A, Pentaerythrit, Glycerin, Trimethylolpropan, Glykol, Glykoläther und anderer mehrwertiger, vorzugsweise zwei- bis vierwertiger Alkohole eingesetzt werden.

Sollen die kondensierten Phenole $a_2$) allein verwendet werden, so nimmt man zweckmässigerweise solche auf Basis von Tri- oder Tetraglycidyläthern.

Andere geeignete Verbindungen mit Epoxidgruppen sind stickstoffhaltige Diepoxide, wie sie in der US-PS 3 365 471 beschrieben sind, Epoxidharze aus 1,1-Methylen-bis-(5-substituiertem Hydantoin) nach der US-PS 3 391 097, Diepoxide aus Bisimiden nach US-PS 3 450 711, epoxylierte Aminomethyl-di-phenyloxide nach US-PS 3 312 664, heterocyclische N,N'-Diglycidylverbindungen nach US-PS 3 503 979, Aminoepoxyphosphate nach GB-PS 1 172 916 oder 1,3,5-Triglycidylisocyanurate.

Besonders bevorzugt als Komponente $a_2$) sind die Phenolgruppen enthaltenden, praktisch epoxidgruppenfreien Umsetzungsprodukte von Diglycidyläthern des Bisphenol A oder mehrwertiger aliphatischer Alkohole, wie Pentaerythrit, Trimethylolpropan und Glycerin, mit Bisphenol A und gegebenenfalls Phenol. Solche Produkte weisen im allgemeinen Molekulargewichte von 650 bis 1300 und Epoxidwerte von 0,004 bis 0,01 auf und können beispielsweise bei Temperaturen zwischen 160 und 180°C, bei Anwesenheit von Reaktionskatalysatoren bei entsprechend niedrigen Temperaturen, hergestellt werden.

Die kondensierten Phenole $a_2$) enthalten aliphatische gebundene Hydroxylgruppen. Zum Teil entstehen diese aus den Epoxidgruppen der Epoxidharze (E) bei deren Umsetzung mit den Bisphenolen (B) bzw. mit den Phenolen (P). Hydroxylgruppen können aber auch schon in den Epoxidharzen selbst enthalten sein, wenn diese durch Umsetzung von mehr als zweiwertigen Alkoholen (z.B. Pentaerythrit, Trimethylolpropan oder Glycerin) mit 2 Mol Epichlorhydrin hergestellt wurden.

Für den an sich bevorzugten Fall, dass Gemische der Komponenten ($a_1$) und ($a_2$) eingesetzt werden, liegt das Gewichtsverhältnis der beiden Komponenten zwischen 1:0,1 und 1:5.

Als sekundäre Amine ($a_3$), die mindestens eine Hydroxylalkylgruppe enthalten, eignen sich beispielsweise Alkyläthanolamine oder Alkylisopropanolamine mit 1 bis 6 Kohlenstoffatomen in der Alkylgruppe. Bevorzugt sind jedoch Dialkanolamine von Alkoholen mit 2 bis 6 Kohlenstoffatomen, insbesondere Diäthanolamin sowie Gemische dieser Dialkanolamine mit Alkylalkanolaminen.

Die sekundären Amine ($a_3$), die in den Mannich-Basen als Dialkanolaminomethylgruppen und Alkylalkanolaminomethylgruppen eingebaut sind, sind für den Grad der Dispergierbarkeit der Bindemittel in dem gewünschten pH-Bereich von 6,0 bis 10,2 und für die Vernetzung des Systems von wesentlicher Bedeutung.

Als sekundäre Dialkyl- oder Dialkoxyalkylamine ($a_4$), die zusammen mit den hydroxyalkylgruppenhaltigen Aminen ($a_3$) für die Herstellung der Mannich-Basen eingesetzt werden, eignen sich solche der allgemeinen Formel

```
     R1
    /
H-N
    \
     R2
```

wobei $R_1$ und $R_2$ gleich oder verschieden sind und für einen geradkettigen oder verzweigten aliphatischen Rest mit 2 bis 10 Kohlenstoffatomen, der gegebenenfalls Alkoxygruppen enthält, stehen. Derartige geeignete sekundäre Amine sind beispielsweise Di-n-butylamin, Di-n-propylamin, Diisopropylamin, Di-n-pentylamin, Di-n-hexylamin, Di-n-octylamin, Di-2-äthylhexylamin und Di-2-alkoxyäthylamine, wie z.B. Di-2-methoxy-, Di-2-äthoxy- oder Di-2-butoxyäthylamin sowie solche, in denen $R_1$ und $R_2$ zu einem Ring verknüpft sind, wie z.B. Morpholin oder Piperidin.

Bevorzugt geeignet sind Di-n-butylamin, Di-2-äthylhexylamin und Di-n-hexylamin. Die Wirkungsweise dieser sekundären Amine ($a_4$) liegt vornehmlich in der Beeinflussung der Stabilitätseigenschaften der Bindemittel, ausserdem tragen sie zum Verlauf und zur «inneren Weichmachung» der aus den Bindemitteln hergestellten Lackschichten bei. Sie leisten auch einen gewissen Beitrag zur Vernetzung.

Die sekundären Amine können unter anderen, bedingt durch ihre Herstellungsweise, auch Anteile entsprechender primärer Amine enthalten, doch sollte deren Anteil 20 Gewichtsprozent des sekundären Amins nicht übersteigen. Das Gewichtsverhältnis der Komponente ($a_3$) und ($a_4$) kann zwischen 1:10 und 1:0,1, vorzugsweise zwischen 1:2 und 2:1 liegen.

Als Formaldehyd bzw. Formaldehyd liefernde Verbindungen ($a_5$) werden wässrige oder alkoholische, wie z.B. butanolische Formaldehydlösungen oder Paraformaldehyd oder deren Gemische verwendet.

Die Herstellung der Mannich-Basen erfolgt nach den üblichen, in der Literatur angegebenen Methoden [vgl. z.B. Houben-Weyl, Methoden der organischen Chemie, Band XI/1, Seite 731, (1957)], vorzugsweise durch Umsetzung bei Temperaturen zwischen 20 und 80°C. Die Verhältnisse der eingesetzten Ausgangsstoffe richten sich nach den jeweils angestrebten Eigenschaften, wobei das Molverhältnis der Komponenten ($a_1$) und ($a_2$) zu den Komponenten ($a_3$) und ($a_4$) bevorzugt 1:0,75 bis 1:3 ist. Im allgemeinen wird aber auf jede phenolische Hydroxylgruppe etwa ein Mol sekundäres Amin eingesetzt. Die Menge an ($a_5$) beträgt mindestens ein Mol, bezogen auf ein Mol sekundäres Amin.

Die epoxidgruppenfreien Mannich-Basen werden in einer Menge von 50 bis 90, vorzugsweise 60 bis 80 Gewichtsprozent, mit 5 bis 50, vorzugsweise 10 bis 30 Gewichtsprozent Epoxidharz umgesetzt. Die Reaktion der beiden Komponenten erfolgt im allgemeinen bei Temperaturen von 20 bis 100°C, vorzugsweise 60 bis 80°C, gegebenenfalls in Gegenwart von organischen Lösungsmitteln wie z.B. Alkoholen, Glykoläthern und Ketonen. Das erhaltene Reaktionsprodukt ist im wesentlichen epoxidgruppenfrei.

Ein Teil der aliphatisch gebundenen Hydroxylgruppen des Stabilisierungsmittels kann gegebenenfalls in Urethangruppen umgewandelt werden. Für die Reaktion der Hydroxylgruppen mit teilblockierten Polyisocyanaten werden bevorzugt die epoxidgruppenhaltigen Harze umgesetzt. Werden Epoxidharze auf Basis mehrwertiger aliphatischer Alkohole, z.B. Pentaerythrit, verwendet, dann erfolgt der Angriff des Isocyanats bevorzugt an der freien primären Alkoholgruppe, erst in zweiter Linie reagiert die sekundäre Alkoholgruppe, die aus dem Epoxidring gebildet worden war.

Auch eventuell vorhandene Amino- oder Iminogruppen können mit den teilblockierten Polyisocyanaten reagieren, was in manchen Fällen erwünscht sein kann.

Die Reaktion wird üblicherweise bei Temperaturen von 50° bis 120°C, vorzugsweise von 70° bis 100°C vorgenommen, wobei übliche Katalysatoren für die Polyurethan-Bildung, wie z.B. Dibutylzinndilaurat, anwesend sein können. Es wird in Abwesenheit von polaren Lösungsmitteln gearbeitet; vorzugsweise wird die Umsetzung in der Schmelze vorgenommen, es können jedoch auch inerte Verdünnungsmittel zugegen sein.

Als teilblockierte Polyisocyanate sind aromatische Diisocyanate, wie Toluylendiisocyanate oder Xylylendiisocyanate oder deren Dimere und Trimere besonders geeignet. Es können jedoch auch aliphatische Diisocyanate, wie Hexamethylendiisocyanat, verwendet werden; ausserdem Präpolymere, die durch Umsetzung von Polyolen oder Polyätherpolyolen mit einem Überschuss an Polyisocyanaten hergestellt werden. Als Blockierungsmittel kommen bevorzugt aliphatische Alkohole in Frage, die geradkettig, verzweigt oder ringförmig vorliegen können, wie z.B. Methanol, Äthanol, n-, iso- oder tert.-Butanol, Hexanol, Äthylhexanol, Furfurylalkohol, Cyclohexanol, Alkylglykole, Alkyldiglykole und Alkyltriglykole. Aber auch andere Blockierungsmittel, wie Oxime, Lactame, Ketone oder Malonester können verwendet werden.

Es ist ohne weiteres möglich, nur einen Teil der Mannich-Basen bzw. der Epoxidharze mit Polyisocyanaten zu modifizieren: Sei es, dass nebeneinander Epoxidverbindungen mit und ohne aliphatische Hydroxylgruppen vorliegen, sei es, dass nach erfolgter Umsetzung mit Polyisocyanat weitere, unmodifizierte Epoxidverbindungen zugegeben werden.

Die Mengenverhältnisse bei der Reaktion mit den teilblockierten Polyisocyanaten werden bevorzugt so gewählt, dass auf ein Mol basischen Stickstoff im fertigen Reaktionsprodukt 0,01 bis 1,0, vorzugsweise 0,05 bis 0,5 Mol Urethangruppen kommen, wobei sowohl die Urethanbindung zwischen Reaktionsprodukt und Polyisocyanat als auch diejenige zwischen Blockierungsmittel und Polyisocyanat gerechnet wird.

Der gesamte Aufbau des Reaktionsproduktes erlaubt nach seiner Protonisierung mit Säuren als Stabilisierungsmittel zu gewährleisten, dass das pulverförmige Bindemittel in ihm so verteilt werden kann, dass eine stabile wässrige Dispersion entsteht. Das Stabilisierungsmittel ist in seiner protonisierten Form mit Wasser verdünnbar. Nach Bedarf können zusätzliche Lösungsmittel, die aber so ausgewählt sein müssen, dass sie in Mischung mit Wasser das pulverförmige Bindemittel nicht anlösen, mit enthalten sein, wie beispielsweise Alkohole, wie Isopropanol, Propanol, Butanol, Glykole, Glykoläther, wie Äthylenglykol, Propylenglykol, Äthylenglykol-mono-äthyläther, Äthylenglykol-mono-propyläther, Äthylenglykol-mono-butyläther oder auch andere wie Tetrahydrofuran, aliphatische und/oder aromatische Kohlenwasserstoffe, Ester, Äther, Ätherester, um die Lösungseigenschaften und Dispergiereigenschaften des Stabilisierungsmittels günstig zu beeinflussen.

Ein wichtiges Merkmal der Erfindung ist es, dass das Stabilisierungsmittel auch in feinteiliger Form, d.h. als ionisches Pulver, in dem Überzugsmittel vorliegen kann.

Für das Stabilisierungsmittel in Form eines ionischen Pulvers können vom chemischen Aufbau her dieselben Kunstharze verwendet werden wie für das gelöste bzw. dispergierte Stabilisierungsmittel mit der Einschränkung, dass sie als ionische Kunststoffe bei Raumtemperatur in fester und feinteiliger Form vorliegen müssen. Dies ist in der Regel der Fall, wenn sie eine Glastemperatur von 30° bis 150°C, vorzugsweise von 40° bis 130°C, aufweisen.

Bevorzugt eignen sich als Stabilisierungsmittel Kunststoffpulver aus der Gruppe der Epoxidharze, Polyesterharze, Acrylatharze, Polyurethanharze und Polyamidharze. Als ionische Gruppen enthalten sie Ammonium-, Sulfonium- oder Phosphoniumgruppierungen. Besonders vorteilhaft

sind solche feinteiligen Kunststoffe, die Ammoniumstrukturen enthalten.

Sie werden hergestellt nach bekannten Methoden, z.B. durch Reaktion von Epoxidharzen oder modifizierten Epoxidharzen mit primären oder sekundären Aminen und anschliessender Neutralisation der Aminogruppen mit Säuren. Als Epoxidharze bzw. modifizierte Epoxidharze geeignet sind die eingangs aufgeführten epoxidgruppenhaltigen Harze.

Als Stabilisierungsmittel kommen auch solche feinteiligen Kunststoffe in Frage, die durch Umsetzung von epoxidgruppenhaltigen Harzen mit tertiären Ammoniumsalzen zu quartären Ammoniumverbindungen erhalten wurden. Sie sind ebenfalls bekannt und beispielsweise in der DE-OS 2 531 960 beschrieben.

Als Stabilisierungsmittel geeignet sind auch pulverförmige, feinteilige Acrylatharze mit basischen Stickstoffgruppen. Solche Acrylatharze entstehen durch die Verwendung von z.B. Dimethylaminoäthylacrylat, Diäthylaminoäthylacrylat, Dimethylaminopropylacrylat, Diäthylaminopropylacrylat oder den entsprechenden Methacrylaten als Comonomere bei der Polymerisation und anschliessende Neutralisation des erhaltenen Copolymerisats mit Säuren.

Auch ionische Polyurethanpulver, für deren Herstellung als Polyolkomponente z.B. Triäthanolamin oder Tripropanolamin mitverwendet wird, sind als Stabilisierungsmittel geeignet.

Sämtliche Pulver dieser Art sind in der wässrigen Dispersion als Stabilisierungsmittel einsatzfähig, vorausgesetzt, dass sie mit dem neutralen pulverförmigen Bindemittel verträglich sind. Eine Unverträglichkeit lässt sich daran leicht erkennen, dass sich der Überzug beim Einbrennen trennt.

Das ionische Kunststoffpulver kann in dieser Form in der wässrigen Dispersion dispergiert sein. Es ist aber auch möglich, ein Kunststoffpulver zu verwenden, das Füllstoffe enthält. In diesem Fall sind die Pigmente und/oder Füllstoffe bei der Herstellung des ionischen Kunststoffpulvers bereits in dieses miteingearbeitet worden.

Die erfindungsgemässe wässrige Dispersion ist nicht allein darauf beschränkt, dass sie nur ein einziges ionischs Harz als Stabilisierungsmittel enthält. Es können auch Gemische von zwei und mehr verschiedenen Kunststoffpulvern enthalten sein. Hierbei kann das eine oder andere Kunststoffpulver Pigmente und/oder Füllstoffe enthalten, das andere aber frei von diesen Zusatzstoffen sein. Die zum Einsatz gelangenden Kunststoffpulver können ausser den Pigmenten und Füllstoffen noch geringe Mengen von Härtungsmitteln und andere Zusatzstoffe, die das Fliessverhalten des Pulvers während des Einbrennens regulieren, enthalten. Diese in das Kunststoffpulver eingearbeiteten Zusätze werden in ihrer Wirkung nicht durch die wässrige Dispersion negativ beeinflusst.

Wie in anderen Überzugsmitteln üblich, kann die wässrige Dispersion ebenfalls Hilfsstoffe enthalten, wie beispielsweise Härtungskatalysatoren, Mittel zur Verbesserung des Verlaufs, Antischaummittel und Haftverbesserungsmittel. Auch ein zusätzlicher Gehalt der wässrigen Dispersion an Vernetzungsmitteln, mit denen die Komponenten das Bindemittel und das Stabilisierungsmittel bei Einbrenntemperaturen unter Vernetzung reagieren, ist für das erfindungsgemässe Verfahren in vielen Fällen vorteilhaft. Als Vernetzungsmittel kommen beispielsweise Aminoplastharze, wie z.B. Melaminformaldehydharze oder Harnstofformaldehydharze, Phenoplastharze oder voll blockierte Polyisocyanate in Frage.

Die Herstellung der wässrigen Dispersion erfolgt nach den in der Lackindustrie bekannten Methoden. So können die Bestandteile der Dispersion mittels einer hochtourigen Dispergiermaschine direkt in Wasser oder eine Dispersion eines Teils der Bestandteile eingerührt werden.

Eine weitere Möglichkeit der Herstellung der wässrigen Dispersion besteht darin, eine wässrige Aufschlämmung eines Kunststoffpulvers direkt in die wässrige Lösung des Stabilisierungsmittels einzumischen. Bei dieser Methode entfällt das aufwendige Vermahlen mittels Sandmühle oder Rührwerksmühle.

Die wässrige Dispersion ist hervorragend geeignet für ein Beschichtungsverfahren wie Spritzen, Streichen, Tauchen, Fluten, Walzen oder Rakeln.

Für die Durchführung der Beschichtung wird die wässrige Dispersion bis zu einem Festkörpergehalt zwischen 20 und 50%, vorzugsweise zwischen 25 und 40%, mit Wasser herab verdünnt. Der pH-Wert liegt zwischen 1 und 9, bevorzugt aber zwischen 5 und 9.

Zur Erzielung einer glatten kocherfreien Oberfläche ist es mitunter zweckmässig, eine kurze Vortrocknung bei < 100°C vor dem Einbrennen vorzuschalten.

Die Eigenschaften des eingebrannten Überzuges sind technologisch hervorragend. Die Korrosionsfestigkeit ist überraschend gut und variiert mit der Natur der festen Pulverlacke. Die eingebrannte Schicht kann als Grundierung dienen und ohne weiteres mit üblichen Lacken weiter lackiert werden. Sie ist auch als Decklack geeignet.

Die nachfolgenden Beispiele sollen die Erfindung erläutern, aber nicht einschränken. Prozentangaben beziehen sich auf Gewichtsprozent; Teile auf Gewichtsteile.

Beispiel 1

(Herstellung einer neutralen pulverförmigen Komponente auf Epoxidharzbasis)

100 g eines Epoxidharzpulvers aus Bisphenol A und Epichlorhydrin mit einem Schmelzbereich von 70° bis 75°C nach Kofler, 3 g eines Verlaufsmittels, 20 g Titandioxid (Rutil-Typ), 8 g Aluminiumsilikat, 2 g Eisenoxidrot und 5 g eines Dicyandiamid-Derivates werden in einem Kneter in der für die Herstellung pulverförmiger Anstrichmittel üblichen Weise geschmolzen und zusammengeknetet. Das erstarrte Gemisch wird vorgemahlen

und dann in einer Spiralstrahlmühle zu einem Pulver vermahlen, das einen maximalen Teilchendurchmesser von 30 µm und einen mittleren Teilchendurchmesser von 10 bis 15 µm hat.

Beispiel 2

(Herstellung einer neutralen pulverförmigen Komponente auf Basis eines Epoxidpolyesterharzes)

100 g eines carboxylgruppenhaltigen Polyesters auf Basis von Isophthalsäure, NPG, Trimethylolpropan und Trimellithsäureanhydrid mit Säurezahl von 95 und einem Erweichungspunkt von 85°C, 100 g eines Epoxidharzes nach Beispiel 1, 80 g Titandioxid (Rutil-Type) und 5 g eines Verlaufmittels (Modaflow®) werden vorgemischt und gemäss Beispiel 1 in ein Pulver umgewandelt.

Beispiel 3

(Herstellung einer neutralen pulverförmigen Komponente auf Basis eines Polyesterharzes)

100 g des in Beispiel 2 zur Herstellung des Epoxid-Polyesters eingesetzten Polyesters werden mit 12 g Triglycidylisocyanurat, 42 g Titandioxid (Rutil-Type) und 3 g Verlaufmittel (Modaflow®) vorgemischt und gemäss Beispiel 1 in ein Pulver umgewandelt.

Beispiel 4

(Herstellung einer neutralen pulverförmigen Komponente auf Basis eines Polyurethanharzes)

100 Teile eines handelsüblichen OH-Polyesters auf Basis von Isophthalsäure, Neopentylglykol und Trimethylolpropan mit einer OH-Zahl von etwa 50 und einer Säurezahl von 3 bis 5 wurden zusammen mit 20 Teilen eines mit ε-Caprolactam verkappten Isophorondiisocyanates, 1 Teil Verlaufmittel (Modaflow®) und 60 Teilen Titandioxid (Rutil-Type) im Fluid-Mischer vorgemischt und gemäss Beispiel 1 in ein Pulver umgewandelt.

Beispiel 5

(Herstellung eines kationischen Stabilisierungsmittels)

Ein Amin-Epoxidadditionsprodukt wurde wie folgt hergestellt: Es wurden 1830 Teile des Polyglycidyläthers von Bisphenol A mit einem Epoxidäquivalenzgewicht von 915 in 353,2 Teilen Methylbutylketon gelöst. Dazu wurde die Mischung unter Rühren und unter Rückflusskühlung auf 130°C erwärmt, wobei beim Rückfluss des Lösungsmittels etwa vorhandenes Wasser in einer entsprechenden Falle abgetrennt wurde. Bei 80°C wurden dann in einer Atmosphäre von trockenem Stickstoff 52 Teile des Diketimins aus einem Mol Diäthylentriamin und 2 Mol Methylisobutylketon (vgl. US-PS 3 523 925) und 138,8 Teile Diäthylamin zugegeben. Der Ansatz wurde auf 120°C erwärmt und wurde dann bei dieser Temperatur für etwa 2 Stunden gehalten und anschliessend mit 326 Teilen Propylenglykolmonomethyläther verdünnt. Das erhaltene kationische Harz, das potentielle primäre Amingruppen (die sich nach Zugabe von Wasser aus den Ketimingruppen bilden) enthielt, wurde für die spätere Verwendung gelagert.

Beispiel 6

(Herstellung eines kationischen Stabilisierungsmittels)

Ein Reaktionsgefäss wurde mit 302 Teilen Bisphenol A und 1770 Teilen (1700 Teilen Feststoff) eines handelsüblichen Epoxidharzes auf Basis von Epichlorhydrin und Bisphenol A mit einem Epoxidäquivalent von etwa 193 bis 203 beschickt. Die Mischung wurde unter Stickstoff 90 Minuten erwärmt, wobei durch die exotherme Reaktion eine Maximaltemperatur von 168°C erreicht wurde.

Dann wurde die Reaktionsmischung auf 115°C abgekühlt und es wurden 850 Teile Polypropylenglykol vom Molekulargewicht 625 zugegeben. Die Reaktionsmischung wurde weiter auf Raumtemperatur abgekühlt und über Nacht unter Stickstoff gelagert. Am nächsten Morgen wurde die Reaktionsmischung unter Stickstoff auf 115°C erwärmt und dann wurden 5,5 Teile Dimethyläthanolamin zugegeben. Die Reaktionsmischung wurde nun für etwa 8 Stunden und 40 Minuten bei einer Temperatur von 130 bis 138°C gehalten. Dann wurden 9,8 Teile einer 85%igen wässrigen Milchsäurelösung zugegeben.

Die Reaktionsmischung wurde dann auf 98°C abgekühlt und bei dieser Temperatur wurden 162 Teile Dimethyläthanolamin-Milchsäuresalz (75% Feststoffe in Isopropanol) und 150 Teile entionisiertes Wasser zur Quaternisierung des Harzes zugegeben. Nach der Zugabe des Quaternisierungsmittels wurde die Mischung 45 Minuten bei 90° bis 92°C gehalten und dann mit 228 Teilen Isopropanol und 536,7 Teilen entionisiertem Wasser verdünnt.

Beispiel 7

(Herstellung eines pulverförmigen Stabilisierungsmittels)

1000 g eines Epoxidharzes auf Basis Bisphenol A vom Epoxidäquivalentgewicht 850 werden in einem Reaktionsgefäss, versehen mit Rührer, Thermometer, Stickstoffeinlass, Rückflusskühler und Zulauftrichter, bei 130°C aufgeschmolzen. Durch den Zulauftrichter werden 105 g Diäthanolamin bei 120 bis 130°C zugegeben und eine Stunde reagieren lassen. Danach werden 60 g Eisessig zugegeben, 30 Minuten bei 120° bis 130°C nachreagiert und ausgegossen. Es wurde ein Festprodukt erhalten.

Schmelzpunkt: 74°C
MEQ-Säure: 0,359 MEQ/g
MEQ-Base: 0,489 MEQ/g
Viskosität: 910 mPa.s (50%ige Lösung in Äthylglykol)

Das Festprodukt wird vorgemahlen. Anschliessend wird durch eine Feinmahlung und Siebung ein Pulver von einer Korngrösse von 20 µm hergestellt.

Beispiel 8
(Herstellung eines pulverförmigen Stabilisierungsmittels)
Unter den Reaktionsbedingungen von Beispiel 7 werden 850 g des Epoxidharzes gemäss Beispiel 7 mit 149 g eines Umsetzungsproduktes von 89 g Dimethyläthanolamin und 60 g Essigsäure umgesetzt. Es wird ein Festprodukt erhalten.

Schmelzpunkt: 103°C
MEQ-Säure: 0,25 MEQ/g
MEQ-Base: 0,403 MEQ/g
Viskosität: 970 mPa.s

Die Pulverherstellung erfolgt wie in Beispiel 7 beschrieben.

Beispiel 9
(Herstellung eines pulverförmigen Stabilisierungsmittels)
100 g eines Pulvers der Harzzusammensetzung gemäss Beispiel 8 (Teilchengrösse 500 µm) werden mit 3 g eines Verlaufsmittels, 20 g Titandioxid (Rutil-Typ), 8 g Aluminiumsilikat und 2 g Eisenoxidrot in einem Kneter in der für die Herstellung pulverförmiger Anstrichmittel üblichen Weise geschmolzen und zusammengeknetet. Das erstarrte Gemisch wird vorgemahlen und dann in einer Spiralstrahlmühle zu einem Pulver vermahlen, das einen maximalen Teilchendurchmesser von 30 µm und einen mittleren Teilchendurchmesser von 10 bis 15 µm hat.

Beispiel 10
(Herstellung eines Überzugsmittels)
50 Teile eines Epoxid-Polyesterpulvers gemäss Beispiel 2 wurden mit 10 Teilen eines festen kationischen Harzes gemäss Beispiel 8 und 40 Teilen Wasser auf einer Rührwerksmühle vermahlen, bis eine Feinheit von < 20 µm (Feinheitsbestimmung mittels Lichtmikroskop) erreicht war.

Beispiel 11
(Herstellung eines Überzugsmittels)
50 Teile eines Polyurethanpulvers gemäss Beispiel 4 werden mit 1 Teil eines festen kationischen Harzes gemäss Beispiel 7 und 49 Teilen Wasser nach der Verfahrensweise des Beispiels 10 zu einem Überzugsmittel verarbeitet.

Beispiel 12
(Herstellung eines Überzugsmittels)
50 Teile eines Polyesterpulvers gemäss Beispiel 3 wurden mit einer Mischung aus 4,5 Teilen des kationischen Harzes gemäss Beispiel 5 und 0,05 Teilen Essigsäure sowie 45,45 Teilen Wasser gemischt und auf einer Rührwerksmühle vermahlen.

Beispiel 13
(Herstellung eines Überzugsmittels)
50 Teile eines Epoxidpulvers gemäss Beispiel 1 wurden mit 5 Teilen des gelösten kationischen Harzes gemäss Beispiel 6 und 45 Teilen Wasser in einer Kugelmühle bis zu einer Feinheit von < 20 µm (Feinheitsbestimmung mittels Lichtmikroskop) zusammen vermahlen.

Beispiel 14
(Herstellung eines Überzugsmittels)
50 Teile eines Polyurethanpulvers gemäss Beispiel 4 wurden mit 2 Teilen des festen kationischen Stabilisierungsmittels gemäss Beispiel 9 und 48 Teilen Wasser nach der Verfahrensweise des Beispiels 10 zu einem Überzugsmittel verarbeitet.

Die erfindungsgemäss hergestellten Überzugsmittel waren von pastöser Konsistenz und wiesen eine gute Lagerstabilität auf. Diese betrug bei Raumtemperatur wenigstens 2 Wochen. Der Grossteil der Überzugsmittel hatte auch nach mehr als einem halben Jahr noch nicht fest abgesetzt.

Vor der Applikation wurden die Überzugsmittel mit Wasser auf einen Festkörper von etwa 35 Gew.-% eingestellt. Mittels einer Spritzpistole (Düsenweite 1,2 mm, Spritzdruck 4 bis 5 bar) wurden die Überzugsmittel auf phosphatierte und auf mit einer Elektrotauchgrundierung beschichtete Bleche gespritzt. Nach kurzer Ablüftung (ca. 5 min) wurde 10 min bei 70° bis 80°C vorgetrocknet und anschliessend 20 min bei 180°C eingebrannt. Die erhaltenen Überzüge zeigten eine gute Oberfläche und ausgezeichnete klimatisch-technologische Prüfwerte.

**Patentansprüche**

1. Verfahren zum Herstellen eines Überzuges durch Aufbringen eines Überzugsmittels auf Basis einer wässrigen Dispersion, die gegebenenfalls Pigmente, Härter, Füllstoffe und sonstige bekannte Hilfsmittel enthält, auf ein Substrat durch ein Beschichtungsverfahren wie Spritzen, Streichen, Tauchen, Fluten, Walzen, Rakeln oder dergleichen und anschliessendes Härten des Überzuges, dadurch gekennzeichnet, dass man eine Dispersion eines pulverförmigen Bindemittels aufbringt, die als Stabilisierungsmittel ein Salz eines kationischen Kunstharzes enthält, und den Überzug durch Einbrennen zu einem auf dem Substrat festhaftenden Film härtet.

2. Verfahren nach Anspruch 1, dadurch gekennzeichnet, dass das Stabilisierungsmittel in gelöster oder disperser Form in dem Überzugsmittel vorliegt.

3. Verfahren nach Anspruch 1, dadurch gekennzeichnet, dass das Stabilisierungsmittel in feinteiliger Form in dem Überzugsmittel vorliegt.

4. Verfahren nach Anspruch 1 bis 3, dadurch gekennzeichnet, dass als Stabilisierungsmittel ein kationisches Kunstharz verwendet wird, das durch wenigstens teilweise Neutralisation eines Stickstoffatome im Molekül enthaltenden basischen Harzes mit einer sauren Verbindung hergestellt worden ist.

5. Verfahren nach Anspruch 1 bis 4, dadurch gekennzeichnet, dass als Stabilisierungsmittel ein kationisches Kunstharz verwendet wird, das

quartäre Ammoniumgruppen, Sulfoniumgruppen und/oder Phosphoniumgruppen enthält.

6. Verfahren nach Anspruch 1 bis 5, dadurch gekennzeichnet, dass der Anteil des kationischen Stabilisierungsmittels an dem gesamten Bindemittelanteil des Überzugsmittels 0,5 bis 70 Gewichtsprozent, vorzugsweise 1 bis 50 Gewichtsprozent, besonders bevorzugt 2 bis 35 Gewichtsprozent beträgt.

7. Verfahren nach Anspruch 1 bis 6, dadurch gekennzeichnet, dass die wässrige Dispersion organische Lösungsmittel enthält, die in Kombination mit Wasser das pulverförmige Bindemittel nicht anlösen.

8. Verfahren nach Anspruch 1 bis 7, dadurch gekennzeichnet, dass das Überzugsmittel dadurch erhalten wurde, dass das pulverförmige Bindemittel und das Stabilisierungsmittel gemeinsam in Wasser dispergiert wurden.

9. Verfahren nach Anspruch 1 bis 8, dadurch gekennzeichnet, dass das Überzugsmittel dadurch erhalten wurde, dass das pulverförmige Bindemittel und das Stabilisierungsmittel durch gemeinsames Extrudieren gemischt wurden und das Extrudat zerkleinert und in Wasser dispergiert wurde.

**Revendications**

1. Procédé de préparation d'un revêtement par application, sur un subjectile, d'un produit de revêtement à base d'une dispersion aqueuse, qui contient éventuellement des pigments, des durcisseurs, des charges et d'autres adjuvants connus, par un procédé d'enduction tel qu'une application au pistolet, à la brosse, au trempé, par ruissellement, au rouleau, à la racle ou assimilé, suivi d'un durcissement du revêtement, caractérisé en ce qu'on applique une dispersion d'un liant pulvérulent qui contient en tant qu'agent de stabilisation un sel d'une résine synthétique cationique et qu'on durcit le revêtement, par séchage au four, pour le transformer en un film adhérant au subjectile.

2. Procédé selon la revendication 1, caractérisé en ce que l'agent de stabilisation se trouve dans le produit de revêtement sous une forme en solution ou en dispersion.

3. Procédé selon la revendication 1, caractérisé en ce que l'agent de stabilisation se trouve dans le produit de revêtement sous une forme finement divisée.

4. Procédé selon l'une quelconque des revendications 1 à 3, caractérisé en ce qu'on utilise en tant qu'agent de stabilisation une résine synthétique cationique qui a été préparée par une neutralisation, au moins partielle, avec un composé acide, d'une résine basique contenant des atomes d'azote dans sa molécule.

5. Procédé selon l'une quelconque des revendications 1 à 3, caractérisé en ce qu'on utilise en tant qu'agent de stabilisation une résine synthétique cationique contenant des groupes ammonium quaternaire, des groupes sulfonium et/ou des groupes phosphonium.

6. Procédé selon l'une quelconque des revendications 1 à 5, caractérisé en ce que le pourcentage de l'agent de stabilisation cationique dans la totalité du liant du produit de revêtement est de 0,5 à 70% en poids, de préférence de 1 à 50% en poids, tout particulièrement de 2 à 35% en poids.

7. Procédé selon l'une quelconque des revendications 1 à 6, caractérisé en ce que la dispersion aqueuse contient des solvants organiques qui, en combinaison avec l'eau, ne déclenche aucune dissolution du liant pulvérulent.

8. Procédé selon l'une quelconque des revendications 1 à 7, caractérisé en ce que le produit de revêtement a été obtenu par la mise en dispersion simultanée, dans l'eau, du liant pulvérulent et de l'agent de stabilisation.

9. Procédé selon l'une quelconque des revendications 1 à 8, caractérisé en ce qu'on a obtenu le produit de revêtement en mélangeant le liant pulvérulent et l'agent de stabilisation par extrusion commune, par broyage de l'extrudat et mise en dispersion dans l'eau.

**Claims**

1. A process for the production of a coating by applying a coating agent based on an aqueous dispersion, which optionally contains pigments, hardeners, fillers and other known auxiliaries, onto a substrate by means of a coating process such as spraying, brushing, dipping, flow-coating, rolling, knife-coating or the like and subsequent hardening of the coating, characterised in that a dispersion of a pulverulent binder is applied, which dispersion contains a salt of a cationic synthetic resin as a stabilising agent, and the coating is hardened by stoving to give a film which adheres firmly to the substrate.

2. A process according to Claim 1, characterised in that the stabilising agent is present in the coating agent in a dissolved or dispersed form.

3. A process according to Claim 1, characterised in that the stabilising agent is present in the coating agent in a finely divided form.

4. A process according to Claims 1 to 3, characterised in that a cationic synthetic resin, which has been prepared by at least partially neutralising with an acid compound a basic resin containing nitrogen atoms in the molecule, is used as a stabilising agent.

5. A process according to Claims 1 to 3, characterised in that a cationic synthetic resin which contains quaternary ammonium groups, sulphonium groups and/or phosphonium groups is used as a stabilising agent.

6. A process according to Claims 1 to 5, characterised in that the content of the cationic stabilising agent in the total binder content of the coating agent is 0.5 to 70 per cent by weight, preferably 1 to 50 per cent by weight, particularly preferably 2 to 35 per cent by weight.

7. A process according to Claims 1 to 6, characterised in that the aqueous dispersion contains organic solvents which, in combination with water, do not incipiently dissolve the pulverulent binder.

8. A process according to Claims 1 to 7, characterised in that the coating agent was obtained by conjointly dispersing the pulverulent binder and the stabilising agent in water.

9. A process according to Claims 1 to 8, characterised in that the coating agent was obtained by mixing the pulverulent binder and the stabilising agent by means of conjoint extruding, comminuting the extrudate and dispersing it in water.